# EUROPEAN PATENT SPECIFICATION

(11) **EP 2 645 809 B1**
(45) Date of publication and mention of the grant of the patent: **21.02.2018**
(21) Application number: 13173692.8
(22) Date of filing: 26.12.2008
(51) Int. Cl.: H04W 76/06, H04W 36/00

(54) **RESOURCE RELEASE METHOD, COMMUNICATION EQUIPMENT, AND NETWORK SYSTEM**
RESSOURCENFREISETZUNGSVERFAHREN, KOMMUNIKATIONSAUSRÜSTUNG UND NETZWERKSYSTEM
PROCÉDÉ DE LIBÉRATION DE RESSOURCES, ÉQUIPEMENT DE COMMUNICATION ET SYSTÈME DE RÉSEAU

(30) Priority: 29.12.2007 CN 200710307869
(43) Date of publication of application: 02.10.2013
(62) Divisional of application: 08870773.2
(73) Proprietor: Huawei Technologies Co., Ltd., Longgang District Shenzhen, Guangdong 518129 (CN)
(72) Inventor: Ma, Jie, Shenzhen (CN); He, Chuanfeng, Shenzhen (CN)
(74) Representative: Kreuz, Georg Maria

(56) References cited:
- WO-A1-00/76243
- DE-A1- 10 315 044
- QUALCOMM EUROPE: "L1/2 aspects for enhanced UL for CELL_FACH", 3GPP DRAFT; R1-074126, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071002, 2 October 2007 (2007-10-02), XP050107658, [retrieved on 2007-10-02]

## Description

### Field of the Invention

The present invention relates to communication technologies, and in particular, to a resource release method, communication equipment, and a computer program product.

### Background of the Invention

To reduce the uplink signaling transmission delay and discontinuous packet transmission delay on a communication network, and optimize the existing random access technologies, a solution is proposed in the prior art. The solution uses the enhanced high-speed random access channels (HS-RACHs) to replace the random access channels (RACHs) to implement uplink transmission.

In the technical solution of the prior art, the enhanced random access procedure is as follows: When a user equipment (UE) receives a response through an acquisition indicator channel (AICH), the NodeB sends an uplink resource allocation message over a downlink channel to the accessed UE, notifying the UE of the available HS-RACH resources. The downlink channel carrying the uplink resource allocation message may be an AICH or a high speed physical downlink shared channel (HS-PDSCH). The UE uses the allocated uplink resource to send the UE ID to the NodeB. The NodeB responds to the corresponding UE by carrying the UE ID over the downlink channel. The UE may continue using the uplink resource if it receives the response within the preset time; otherwise, it stops using the uplink resource. The downlink channel carrying the UE ID may be an E-DCH absolute grant channel (E-AGCH) or an HS-PDSCH. The following problem has become apparent in the related art:
The solution that uses HS-RACHs to replace RACHs for uplink transmission is already proposed in the prior art, but a method for releasing HS-RACH resources is not provided.

Patent Application DE 103 15 044 A1 discloses a method for transmitting data on a common radio link, between a base station (BS) and a multiple terminals (UE) in a communication system. The data is divided into successive transferred time slots of the radio link and the timeslots are combined into a transmission framework. For each time slot, the data are divided into a controller part and a message part. Using the communication system, the access and the transmission of data on a physical high-speed random access channel (HS-PRACH) are undertaken, and the data transmitted. By choosing a transmission frame length (TFL), which marks the period within the transmission of the message part, a physical high-speed random access channel takes place.

Patent Application WO 00/76243 A1 discloses a network element, such as a radio network controller, for use in a communication network (e.g. UMTS), said network element being arranged between an end station and an end element, for example an SGSN, wherein connections are established between said end station and said end element via said network element, said network element comprising means for determining if the connection between said end element and said end station is to be released. QUALCOMM EUROPE: "L1/2 aspects for enhanced UL for CELL_FACH",3GPP DRAFT; R1-074126, 3RD GENERATION PARTNERSHIP PROJECT (3GPP), RAN WG1, Shanghai, China; 2 October 2007, [retrieved on 2007-10-02] discloses a method for releasing high speed random access channel, HS-RACH, resources, comprising: sending, by a user equipment, UE, uplink data by using the HS-RACH resources in a current cell; sending, by the UE, a scheduling information, SI, to a NodeB of the current cell, and the NodeB releases the HS-RACH resources of the current cell.

### Summary of the Invention

Embodiments of the present invention provide resource release methods, communication equipment being a user equipment and a NodeB, and computer program products to solve the HS-RACH resources release problem.

In order to solve the foregoing technical problem, the embodiments of the present invention are implemented through the following technical solutions as defined in the claims.

A method for releasing high speed random access channel (HS-RACH) resources in an embodiment of the present invention includes:
sending, by a user equipment (UE), uplink data by using the HS-RACH resources in a current cell;
determining, by the UE, to reselect a cell after finding that a cell reselection condition is met;
sending, by the UE, a scheduling information (SI) to a NodeB of the current cell, wherein an ID of a logical channel with highest priority in the SI is set to 1111 as release request or release indication; and
releasing, by the UE, the HS-RACH resources of the current cell.

Another method for releasing HS-RACH resources in an embodiment of the present invention includes:
receiving, by a NodeB, uplink data sent by a user equipment (UE) by using the HS-RACH resources;
receiving, by the NodeB, a scheduling information (SI) from the UE after the UE finds that cell reselection conditions are met; wherein an ID of a logical channel with the highest priority in the SI is set to 1111 as release request or release indication; and
releasing, by the NodeB, the HS-RACH resources.

A user equipment for releasing HS-RACH resources, includes:
means for sending uplink data by using the resources in a current cell;
means for determining to reselect a cell after finding that cell reselection conditions are met;
means for sending a scheduling information (SI) to a NodeB of the current cell, wherein an ID of a logical channel with the highest priority in the SI is set to 1111 as release request or release indication; and
means for releasing the HS-RACH resources of the current cell.

A NodeB for releasing HS-RACH resources, includes:
means for receiving uplink data sent by a user equipment (UE) by using an high speed random access channel, HS-RACH, resources; and
means for receiving a scheduling information (SI) from the UE after the UE finds that cell reselection conditions are met; wherein an ID of a logical channel with the highest priority in the SI is set to 1111 as release request or release indication; and
means for releasing the HS-RACH resources.

A computer program product stored on a computer readable storage medium, which contains codes which instruct a user equipment, UE, to perform the following steps, comprising
sending (401, 501), by the UE, uplink data by using high speed random access channel, HS-RACH, resources in a current cell;
determining (402, 502), by the UE, to reselect a cell after finding that a cell reselection condition is met;
sending (403, 503), by the UE, a scheduling information (SI) to a NodeB of the current cell, wherein an ID of a logical channel with highest priority in the SI is set to 1111 as release request or release indication; and
releasing (406, 505), by the UE, the HS-RACH resources of the current cell.

A computer program product stored on a computer readable storage medium, which contains codes which instruct a NodeB, to perform the following steps, comprising
receiving (401, 501), by the NodeB, uplink data sent by a user equipment (UE) by using HS-RACH resources; and
receiving (403, 503), by the NodeB, scheduling information (SI) from the UE after the UE finds that cell reselection conditions are met; wherein an ID of a logical channel with the highest priority in the SI is set to 1111 as release request or release indication; and
releasing, by the NodeB, the HS-RACH resources.

Although the solution that uses HS-RACHs to replace RACHs for uplink transmission is proposed in the prior art, a method for releasing HS-RACH resources is not provided. As a result, the HS-RACH resources in use may be occupied all the time and cannot be released. Therefore, the procedure in the technical solution of the prior art is incomplete and may not be applied currently. In contrast, the technical solution provided in embodiments of the present invention includes: obtaining trigger information; determining to release allocated HS-RACH resources according to the obtained trigger information; and releasing the allocated HS-RACH resources after determining to release the allocated HS-RACH resources. Therefore, the HS-RACH resources in use may be released according to actual situations. This technical solution improves the procedure for using HS-RACHs to replace RACHs for uplink transmission and is more suitable for actual applications.

### Brief Description of the Drawings

FIG. 1 is a flowchart of a method for releasing resources in a first example;
FIG. 2 is a flowchart of a method for releasing resources in a second example (a);
FIG. 3 is a flowchart of a method for releasing resources in a second example (b);
FIG. 4 is a flowchart of a method for releasing resources in an embodiment of the present invention;
FIG. 5 is a flowchart of a method for releasing resources in an embodiment of the present invention;
FIG. 6 is a flowchart of a method for releasing resources in a third example;
FIG. 7 shows a structure of communication equipment in an embodiment of the present invention;
FIG. 8 shows a structure of a first UE in an embodiment of the present invention;
FIG. 9 shows a structure of a second UE in an embodiment of the present invention;
FIG. 10 shows a structure of a network equipment in an embodiment of the present invention; and
FIG. 11 shows a structure of a network system in an embodiment of the present invention.

### Detailed Description of the Embodiments

Embodiments of the present invention provide a method for releasing HS-RACH resources. According to the resource release method in embodiments of the present invention, the network equipment (for example, the NodeB) or the UE may transmit the explicit signaling for HS-RACH resources releasing according to the trigger information. Explicit signaling may be indicated by physical-layer signaling, or implemented through the layer-2 control protocol data unit (PDU), or by using other methods.

The information triggering the NodeB to release resources may be:
information sent by the UE to indicate that the UE has no data to send, or to indicate that the amount of data sent by the UE is lower than the threshold, or to indicate that the UE performs cell handover;
information detected by the NodeB to indicate that the UE has no data to send, or to indicate that the amount of data sent by the UE is lower than the threshold, or to indicate that the UE performs cell handover;
information for changing the UE state, which is determined and sent by the radio network controller (RNC) according to the amount of data sent by the UE, the load of the cell where the UE resides, or the quality of service (QoS) requirement of the UE; or information detected by the NodeB to indicate that the error rate of the data sent by the UE within the preset time is higher than the preset value.
The information sent by the UE to indicate that the UE has no data to send, or to indicate that the amount of data sent by the UE is lower than the threshold, or to indicate that the UE performs cell handover is indicated by the special scheduling information (SI) sent by the UE or indicated by the special physical-layer control channel.

The SI includes the ID (4 bits) of the logical channel with the highest priority in the buffer, buffer usage of the UE, and power head room of the UE (5 bits). The buffer usage of the UE includes: the ratio of the buffer size used by the data of the logical channel with the highest priority to the total buffer size and the buffer state. Whether to release resources is determined according to the buffer usage in the SI.

A method for releasing resources in embodiments of the present invention may be at least applied in the following scenarios:
(1) The UE stays in the CELL_FACH (forward access channel) state, does not perform cell handover, and has no uplink data to send.
(2) The UE does not perform cell handover, but needs to switch state, such as preparing to switch to the CELL_DCH (dedicated channel) or CELL_PCH (paging channel) state.
(3) The UE does not change the state, but needs to perform cell handover to continue sending uplink data.

The following describes the resource release methods in the preceding scenarios with reference to the accompanying drawings.

The following examples and embodiments describe a method for releasing resources through explicit signaling transmitted by the network side (for example, the NodeB).

### First Example

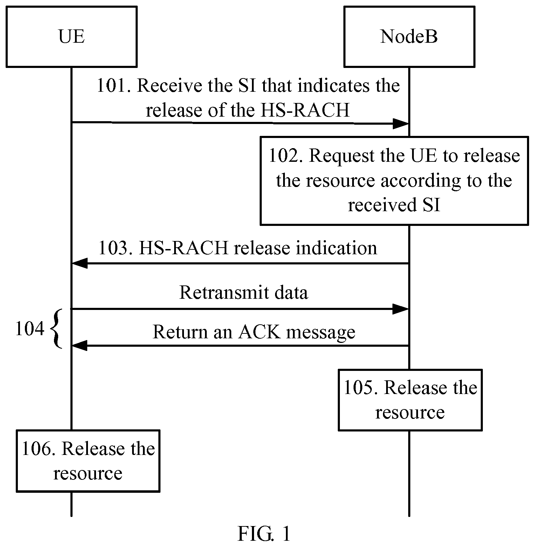

FIG. 1 is a flowchart of a method for releasing resources in the first example. This method is applied when the UE does not change the state, and does not perform cell handover.

As shown in FIG. 1, the process includes the following steps:
Step 101: The NodeB receives the SI sent by the UE.

When using the HS-RACH to send uplink data, the UE sends the SI to the NodeB periodically or when there is new data to be sent. The SI carries the data buffer size of the UE.

The SI may be sent independently or carried in the uplink data.

Step 102: The NodeB determines to request the UE to release the resources according to the information in the received SI.

When finding that the data buffer usage indicated by the SI is lower than a certain threshold or is 0, the NodeB requests the UE to release resources and starts to release the resources related to the UE.

Step 103: The NodeB sends a release indication to the UE.

When the data buffer usage indicated by the SI is 0, the NodeB sends a release indication to the UE, requesting the UE to release resources. The release indication methods are as follows: Method (a): Use the media access control (MAC) control PDU. A format combination of bits in the control PDU represents the resource release indication. In a MAC control PDU, the header contains the type indication (indicating whether the PDU is a control PDU), length of the PDU, and cyclic redundancy check (CRC) value of the PDU; the load part contains the control type bits, for example, resource allocation bit, resource release bit, SI bit, time adjustment bit, resource change bit, and quality measurement bit, etc. If a bit is set to 1, it indicates the corresponding information is carried; if a bit is set to 0, it indicates the corresponding information is not carried, or vice versa. The resource release part may contain the specific resource to be released and the release cause.

Method (b): Use the physical-layer control signaling, for example, the special E-DCH transport format combination (E-TFC) in the E-DPCCH or the special channel quality indicator (CQI) in the HS-DPCCH.

When the data buffer usage indicated by the SI is not 0 but is lower than a certain threshold, the NodeB sends a release indication to the UE, requesting the UE to release resources. The release indication method may be either (a) or (b). In addition, the release indication may also indicate the waiting time before the UE resends a random access request, so as to avoid uplink interference caused by frequent random access requests originated by the UE when the NodeB forcibly releases the resources of the UE, but the UE still has data to be sent. This waiting time may be carried in the MAC control PDU or indicated by the physical-layer signaling. The waiting time may be expressed as a multiple of a certain time unit. For example, if the waiting time unit is 125 ms and the actual waiting time is 256 ms, the waiting time is expressed as 2.

Step 104: Upon receiving the release indication, the UE sends the data to be retransmitted to the NodeB.

After receiving the release indication, the UE first retransmits the packets that are sent before the release indication is received but are not acknowledged by the NodeB through an ACK message. After receiving the release indication, the UE no longer sends new data, but retransmits only the MAC-i/MAC-E packets that are not acknowledged.

Step 105: The NodeB releases the resources related to the UE.

After correctly receiving the retransmitted packets, the NodeB formally releases the physical resources used by the UE.

Step 106: The UE releases the resources.

After retransmitting the packets and receiving the ACK messages returned by the NodeB, the UE releases the buffer data of the MAC layer, releases the process buffer and parameter tables related to physical-layer HS-RACH resources, also releases physical resources.

In addition, it is possible that the UE improperly determines the ACK messages returned by the NodeB as NACK messages or determines the NACK messages as the ACK messages, and thereby retransmits packets to the NodeB continuously. In this case, a retransmission threshold, for example, maximum waiting time or maximum number of retransmissions, may be specified for the NodeB and the UE. The values must be equal on both sides. Once the maximum waiting time or the maximum number of retransmissions is reached, the NodeB and the UE immediately release the resources respectively.

In addition to the data buffer usage indicated by the SI sent by the UE in the example, the factor triggering the NodeB to determine to release resources may also be: a special physical-layer control channel indication indicating that the network side has no data to send; or the NodeB detects that the uplink signals of the HS-RACH have been lower than a threshold for some time, or that all the packets from the UE within a period are incorrect, or that the UE does not upload any data within the activation period.

The resource release is not necessarily performed until data are retransmitted in embodiments of the present invention.

In addition, there may be a step before the NodeB releases resources in the first example: The UE sends an HS-RACH release response to the NodeB; the NodeB releases resources after receiving the release response.

In the technical solution in the first example, multiple types of information may trigger resource release, and the resource release indication may be sent in different modes, so that the resource usage keeps the same on the UE and the network side. In addition, the retransmission threshold may be set to avoid continuous data retransmission.

### Second Example

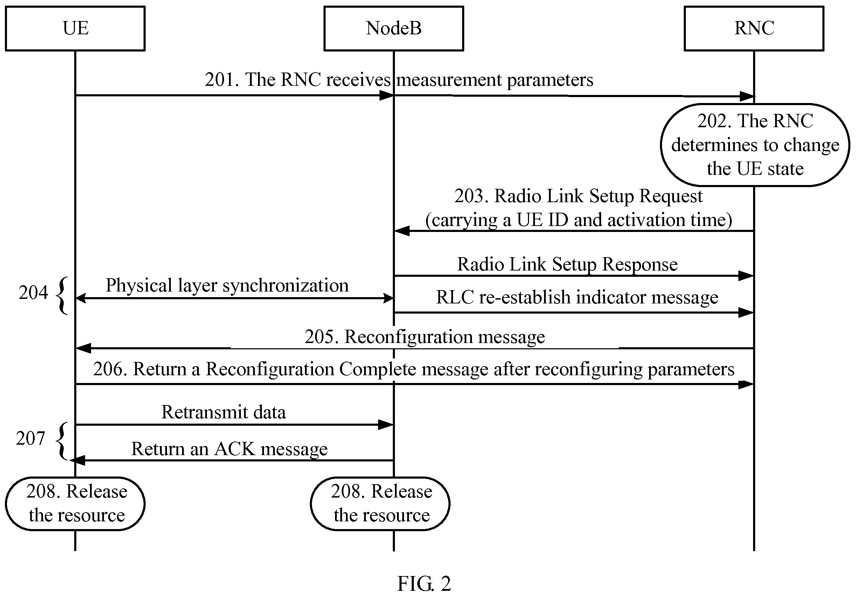

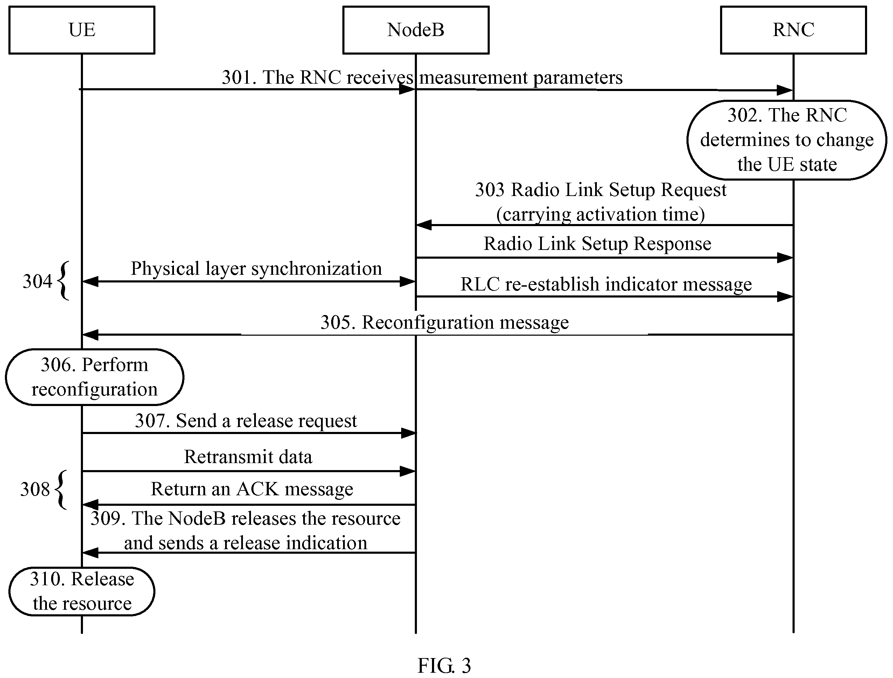

The following describes a method for releasing resources when the UE does not perform cell handover but changes the state according to the second example. Two scenarios are involved. FIG. 2 is a flowchart of a method for releasing resources when the RNC requests the NodeB to release resources in the second example (a). FIG. 3 is a flowchart of a method for releasing resources when the UE requests the NodeB to release resources in the second example (b).

As shown in FIG. 2, the process of a method for releasing resources in the second example (a) includes the following steps:
Step 201: The RNC receives measurement parameters.

The measurement parameters received by the RNC, for example, the current service data amount of the UE or QoS requirement of the UE, are sent by the UE through the NodeB. The RNC may further measure the load of the cell where the UE resides.

Step 202: The RNC determines to change the UE state according to the measurement parameters.

The RNC determines to change the UE state, for example, to the CELL_DCH state according to the service data amount of the UE exceeds a certain threshold, the cell where the UE resides is overloaded, or the QoS of the UE does not meet the requirement.

Step 203: The RNC originates the radio link setup procedure and sends a Radio Link Setup Request message to the NodeB.

The Radio Link Setup Request message sent by the RNC carries the UE ID and activation time. The UE ID enables the NodeB to know the UE that will switch to the CELL_DCH state, which has the same effect as notifying the NodeB of the need to release resources upon UE state changes. The activation time enables the NodeB to know when to enable the radio link.

The Radio Link Setup Request message may also not carry the activation time. When the request does not carry the activation time, the NodeB enables the new physical channel immediately. However, because the RNC knows the exact activation time of the UE, it starts to receive uplink data after the activation time is reached.

Step 204: The NodeB sets up a radio link after receiving the Radio Link Setup Request message. After receiving the Radio Link Setup Request message, the NodeB knows that the HS-RACH resources associated with the UE ID needs to be released, then sets up a radio link as requested, returns a Radio Link Setup Response message to the RNC, performs physical layer synchronization with the UE, and then sends a RLC re-establish indicator message to the RNC. The NodeB does not enable the radio link immediately but enables it when the activation time is reached.

Step 205: The RNC sends a reconfiguration message to the UE.

The RNC sends a reconfiguration message to the UE, instructing the UE to switch to the CELL_DCH state. The activation time carried in the reconfiguration message is consistent with that carried during the radio link setup procedure. In this example, the RNC sends a reconfiguration message to the UE, requesting the UE to reconfigure the parameters and use the new parameters. Using the new parameters also means that the UE needs to release the original resources.

Step 206: After receiving the reconfiguration message, the UE reconfigures the parameters and returns a Reconfiguration Complete message to the RNC.

Step 207: The UE sends the data to be retransmitted to the NodeB.

The UE retransmits the packets that are sent before the reconfiguration message is received but are not acknowledged by the NodeB through ACK messages. After receiving the reconfiguration message, the UE no longer sends new data, but sends only the MAC-i/MAC-E packets that are not acknowledged.

Step 208: The UE and the NodeB use the new configurations and release the resources respectively when the activation time is reached.

After the activation time is reached, the NodeB releases the original HS-RACH resources of the UE, and starts to use the new configurations for interacting with the UE. After the UE changes the state and enables the new configurations, the original HS-RACH resources are released. The resource release may be implemented during the reconfiguration procedure, that is, by adding two parameters (UE ID and activation time) to the Radio Link Setup Request message sent by the RNC. The UE ID enables the NodeB to know the UE that will switch to the CELL_DCH state, which has the same effect as notifying the NodeB of the need to release resources upon UE state changes. The activation time enables the NodeB and the UE to know when to enable the new configuration.

As shown in FIG. 3, the process of a method for releasing resources in the second example (b) includes the following steps:
Steps 301 and 302: These steps are the same as steps 201 and 202.
Step 303: The RNC originates the radio link setup procedure and sends a Radio Link Setup Request message to the NodeB.

The difference from step 203 is that the Radio Link Setup Request message sent by the RNC does not carry the UE ID but carries the activation time. The activation time enables the NodeB to know when to enable the radio link.

The Radio Link Setup Request message may also not carry the activation time. When the request message does not carry the activation time, the NodeB enables the new physical channel immediately. However, because the RNC knows the exact activation time of the UE, it starts to receive uplink data after the activation time is reached.

Step 304: The NodeB sets up a radio link after receiving the Radio Link Setup Request message.

After receiving the Radio Link Setup Request message, the NodeB sets up a radio link as required, sends a Radio Link Setup Response message to the RNC, and performs physical layer synchronization with the UE. After the synchronization, the NodeB sends a RLC re-establish indicator message to the RNC, but does not enable the link immediately.

Step 305: The RNC sends a reconfiguration message to the UE.

The RNC sends a reconfiguration message to the UE, instructing the UE to switch to the CELL_DCH state. The activation time carried in the reconfiguration message is consistent with that carried during the radio link setup procedure.

Step 306: After receiving the reconfiguration message, the UE reconfigures the parameters. Step 307: The UE sends a release request to the NodeB.

The release request may carry the new SI. The UE may send the release request to the NodeB after the activation time is reached or immediately after the parameters are reconfigured.

Step 308: The UE sends the data to be retransmitted to the NodeB.

The UE retransmits the packets that are sent before the reconfiguration message is received but are not acknowledged by the NodeB through ACK messages. After receiving the reconfiguration message, the UE no longer sends new data, but sends only the MAC-i/MAC-E packets that are not acknowledged.

Step 309: The NodeB sends a release indication to the UE.

After receiving the release request and retransmitted data from the UE, the NodeB releases the original HS-RACH resources of the UE and sends a release indication to the UE. Meanwhile, the radio link newly configured by the NodeB is activated.

Step 310: After receiving the release indication, the UE releases the resources and uses the new configuration to send a Reconfiguration Complete message to the network side. The UE state change is complete.

In the preceding process, the UE may also send a release request to the NodeB after it finishes reconfiguration. The release cause carried in the request is that the UE switches to the CELL_DCH state. After receiving the release request from the UE, the NodeB sends a release indication to the UE. After the activation time is reached, the NodeB and the UE release the original HS-RACH resources of the UE at the same time. Meanwhile, the newly configured radio link between the NodeB and the UE is activated, and the UE uses the new configuration to send a Reconfiguration Complete message to the network side. The UE state change is complete.

The preceding descriptions are specific to the situation that the UE switches to the CELL_DCH state. If the UE switches to the CELL_PCH state, the process of setting up a radio link between the RNC and the NodeB is not needed because the UE in the CELL_PCH state must send a Reconfiguration Complete message according to the original configuration. In this case, after receiving the reconfiguration message from the RNC, the UE reconfigures the parameters, and then sends a Reconfiguration Complete message according to the original configuration. After receiving the ACK message from the RNC, the UE sends a release request to the NodeB, and sends the retransmitted data to the NodeB. After receiving the release request and the retransmitted data from the UE, the NodeB sends a release indication to the UE. The UE releases all the HS-RACH resources. Then the state change is complete. The resources are not necessarily released until the data are retransmitted in the second example. The resource release may be implemented during the reconfiguration procedure, that is, by adding the activation time to the Radio Link Setup Request message sent by the RNC. The activation time enables the NodeB and the UE to know when to enable the new configuration.

### First Embodiment

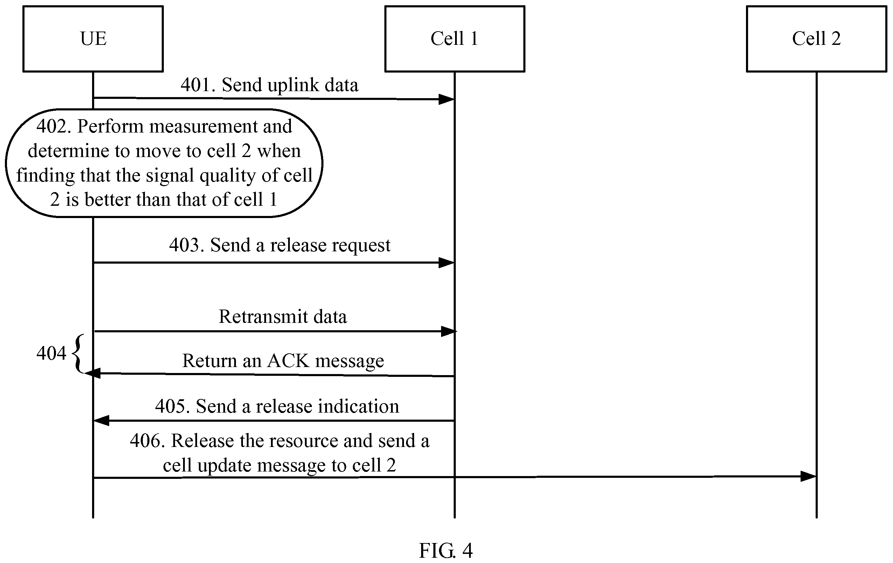

FIG. 4 is a flowchart of a method for releasing resources in an embodiment of the present invention. This method is applied when the UE does not change the state but performs cell handover.

As shown in FIG. 4, the process of the method includes the following steps:
Step 401: The UE sends uplink data by using the HS-RACH in the current cell.
Step 402: The UE determines to reselect a cell after finding that the cell reselection conditions are met.

Here, the cell reselection condition means that a cell with good signal quality is selected when the signal quality of intra-frequency cells is poor. Assume that the UE resides in cell 1, and it determines to move to cell 2 when finding the signal quality of cell 2 is better than that of cell 1.

Step 403: The UE sends a release request to the NodeB of the original cell, that is, cell 1.

The release request sent by the UE is a special release request. For example, the ID of the logical channel with the highest priority in the SI is set to a special reserved value, for example, 1111, or all the bits in the SI are set to 0 or 1. The special value tells the NodeB of the original cell that the release cause is cell handover. Alternatively, the MAC control PDU described in the first example may be used to indicate that the UE needs to release HS-RACH resources due to the cell handover.

Step 404: The UE sends the data to be retransmitted to the NodeB of original cell 1.

The UE retransmits the packets that are sent before the release request is sent but are not acknowledged by the NodeB through ACK messages. After receiving the reconfiguration message, the UE no longer sends new data, but sends only the MAC-i/MAC-E packets that are not acknowledged.

Step 405: The NodeB of original cell 1 sends a release indication to the UE.

After receiving the release request and retransmitted data from the UE, the NodeB of original cell 1 releases the original HS-RACH resources of the UE and sends the release indication to the UE.

Step 406: After receiving the release indication, the UE releases the HS-RACH resources of the original cell, and immediately uses the uplink access resources of the target cell, that is, cell 2, to send a cell update message to the target cell.

In the embodiment of the present invention, the resources are not necessarily released until the data are retransmitted, and the resources may be released immediately after the release request is sent.

In the technical solution of the present invention, the UE may actively send a resource release request to the NodeB after determining to perform cell handover, and then the NodeB delivers a resource release indication to implement resource release.

The following describes other implementations in which the UE sends explicit signaling for resource release.

### Second Embodiment

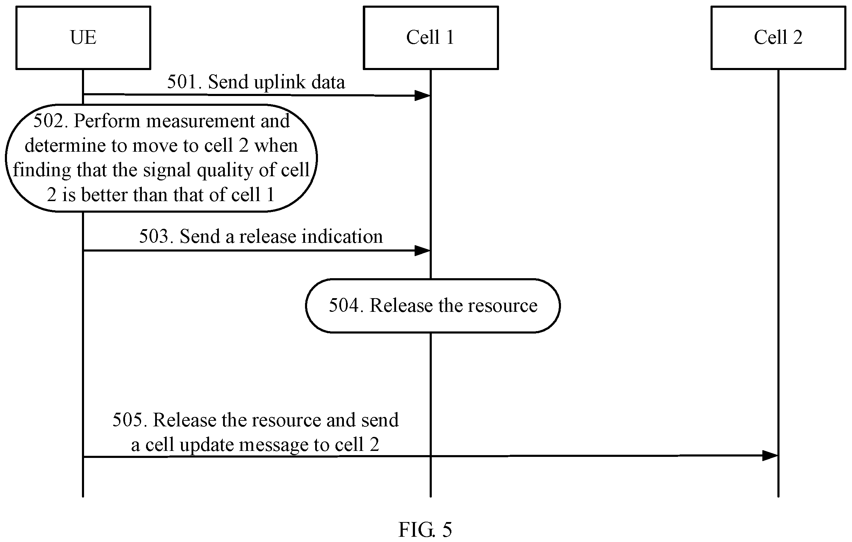

FIG. 5 is a flowchart of a method for releasing resources in the second embodiment of the present invention. This method is applied when the UE does not change the state but performs cell handover.

As shown in FIG. 5, the process of the method includes the following steps:
Step 501: The UE sends uplink data by using the HS-RACH in the current cell.
Step 502: The UE determines to reselect a cell after finding that the cell reselection conditions are met.

Here, the cell reselection condition means that a cell with good signal quality is selected when the signal quality of intra-frequency cells is poor. Assume that the UE resides in original cell 1, and it determines to move to cell 2 when finding the signal quality of cell 2 is better than that of cell 1.

Step 503: The UE sends a release indication to the NodeB of the original cell, that is, cell 1.

The release indication sent by the UE is a special release indication. For example, the ID of the logical channel with the highest priority in the SI is set to a special reserved value, for example, 1111, or all the bits in the SI are set to 0 or 1. The special value tells the NodeB of the original cell that the release cause is cell handover. Alternatively, the release indication may be implemented through the MAC control PDU.

Step 504: After receiving the release indication from the UE, the NodeB of original cell 1 releases the original HS-RACH resources of the UE, and discards the packets that are incorrectly received without waiting for the UE to retransmit the packets.

Step 505: After sending the release indication, the UE immediately releases the HS-RACH resources of the original cell, and then immediately uses the uplink access resources of target cell 2 to send a cell update message to target cell 2 without retransmitting the packets that are incorrectly acknowledged.

In the technical solution of the present invention, the UE actively sends a resource release indication to the NodeB to implement resource release after determining to perform cell handover.

### Third Example

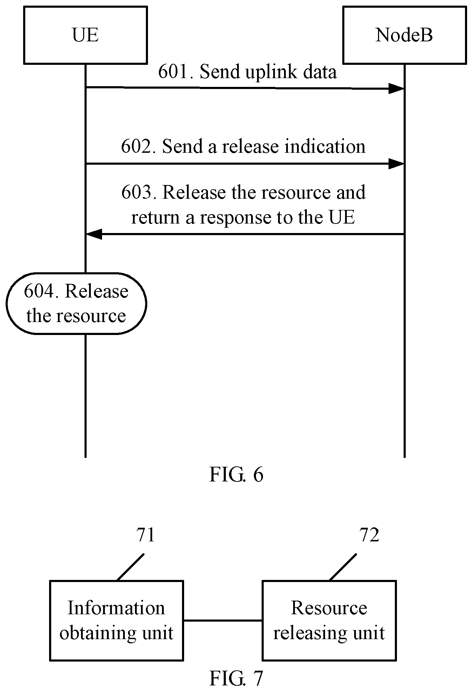

FIG. 6 is a flowchart of a method for releasing resources in the third example.

As shown in FIG. 6, the process of the method includes the following steps:
Step 601: The UE sends uplink data by using the HS-RACH in the current cell.
Step 602: The UE sends a release indication to the NodeB.

If there is no data to be sent, or the UE regards it unnecessary to continue using the HS-RACH resources when the buffered data size of the radio link control (RLC) and /or MAC layers keeps being 0 for a while, the UE may also actively release the resources. The UE notifies the NodeB on the network through an HS-RACH release indication. The release indication may be sent through the special SI, or the MAC control PDU, or physical layer signaling (for example, the special E-TFC value of the E-DPCCH or the special CQI value of the HS-DPCCH).

Step 603: After receiving the release indication from the UE, the NodeB releases the original HS-RACH resources of the UE and returns a response to the UE.

Step 604: If a response is received from the NodeB within the preset time after the UE sends the release indication, the UE directly releases the resources. If no response from the network side is received within the preset time, the UE actively releases the resources.

The UE may also directly release the resources after sending a release indication, without waiting for a response from the NodeB. The UE actively sends a resource release indication to the NodeB, and then releases the resources after receiving a response from the NodeB.

The preceding descriptions detail a method for releasing the resources in embodiments of the present invention. Accordingly, embodiments of the present invention provide communication equipment and a network system. The communication equipment may be a UE or network equipment.

FIG. 7 shows a structure of communication equipment in an embodiment of the present invention.

As shown in FIG. 7, the communication equipment includes:
an information obtaining unit 71, adapted to obtain the information related to resource release; and
a resource releasing unit 72, adapted to determine to release allocated HS-RACH resources according to the information obtained by the information obtaining unit 71, and release the allocated HS-RACH resources at the local end.

The resource releasing unit 72 may include a determining unit and a processing unit.

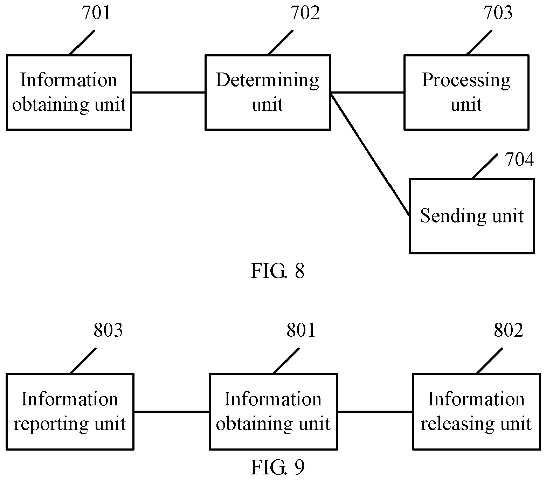

The communication equipment may be a UE where the resource releasing unit includes a determining unit and a processing unit. FIG. 8 shows a structure of a first UE in an embodiment of the present invention.

As shown in FIG. 8, the UE includes an information obtaining unit 701, a determining unit 702, and a processing unit 703.

The information obtaining unit 701 is adapted to obtain its detected trigger information.

The trigger information obtained by the information obtaining unit 701 is the information indicating that the UE has no data to send, or indicating that the amount of data sent by the UE is lower than a threshold, or indicating that the UE performs cell handover.

The determining unit 702 is adapted to determine to release the allocated HS-RACH resources according to the trigger information obtained by the information obtaining unit 701. The processing unit 703 is adapted to release the allocated HS-RACH resources at the local end after the determining unit 702 determines to release the allocated HS-RACH resources. The UE further includes: a sending unit 704, which is adapted to send a resource release indication to the network side after the determining unit 702 determines to release the allocated HS-RACH resources.

FIG. 9 shows a structure of a second UE in an embodiment of the present invention.

The UE includes: a receiving unit, equivalent to the information obtaining unit 801; a processing unit, equivalent to the resource releasing unit 802.

The information obtaining unit 801 is adapted to obtain the resource release indication sent by the network side after the network determines to release the allocated HS-RACH resources according to the trigger information.

The resource releasing unit 802 is adapted to determine to release the allocated HS-RACH resources according to the information obtained by the information obtaining unit 801, and release the allocated HS-RACH resources at the local end.

The UE further includes: an information reporting unit 803, which is adapted to send its detected trigger information to the network side before the information obtaining unit 801 obtains the resource releasing indication. The trigger information sent by the information reporting unit 803 to the network side is the information indicating that the UE has no data to send, or indicating that the amount of data sent by the UE is lower than a threshold, or indicating that the UE performs cell handover.

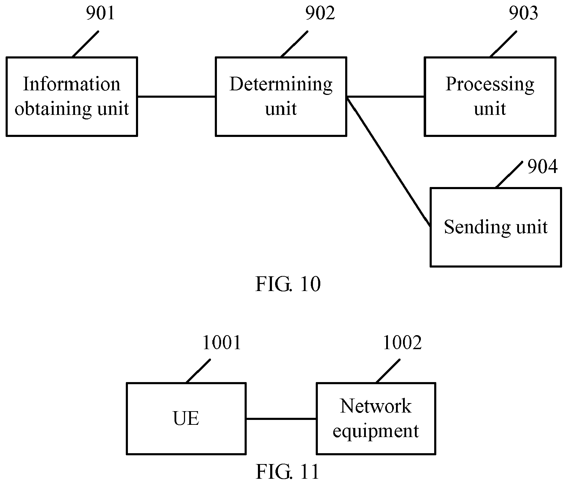

The communication equipment may be network equipment where the resource releasing unit includes a determining unit and a processing unit. FIG. 10 shows a structure of a network equipment in an embodiment of the present invention.

As shown in FIG. 10, the network equipment includes: an information obtaining unit 901, a determining unit 902, and a processing unit 903.

The information obtaining unit 901 is adapted to obtain trigger information.

The trigger information obtained by the information obtaining unit 901 may be: the trigger information sent by the UE or the trigger information obtained after detecting the UE. Specifically, the trigger information obtained by the information obtaining unit 901 may be:
the information sent by the UE to indicate that the UE has no data to send, or to indicate that the amount of data sent by the UE is lower than the threshold, or to indicate that the UE performs cell handover; or
the information detected by the information obtaining unit 901 to indicate that the UE has no data to send, or to indicate that the amount of data sent by the UE is lower than the threshold, or to indicate that the UE performs cell handover; or
the information for changing the UE state, which is determined and sent by the RNC according to the amount of data sent by the UE, the load of the cell where the UE resides, or the QoS requirement of the UE; or
the information detected by the information obtaining unit 901 to indicate that the error rate of the data sent by the UE within the preset time is higher than a preset value.

The determining unit 902 is adapted to determine to release the allocated HS-RACH resources according to the trigger information obtained by the information obtaining unit 901. The processing unit 903 is adapted to release the allocated HS-RACH resources at the local end after the determining unit 902 determines to release the allocated HS-RACH resources. The network equipment may further include a sending unit 904, which is adapted to send a resource release indication to the UE after the determining unit 902 determines to release the allocated HS-RACH resources.

FIG. 11 shows a structure of a network system in an embodiment of the present invention. The network system includes a first equipment and a second equipment. The first equipment is a UE and the second equipment is a network equipment, or vice versa.

As shown in FIG. 11, the UE is marked with 1001 and the network equipment is marked with 1002.

The network system includes:
First mode:
   a UE 1001, adapted to: obtain trigger information, determine to release the allocated HS-RACH resources according to the obtained trigger information, and release the allocated HS-RACH resources at the local end; and a network equipment 1002, adapted to release the allocated HS-RACH resources at the local end after the UE 1001 determines to release the allocated HS-RACH resources.
Second mode:
   a network equipment 1002, adapted to: obtain trigger information, determine to release the allocated HS-RACH resources according to the obtained trigger information, and release the allocated HS-RACH resources at the local end; and a UE 1001, adapted to release the allocated HS-RACH resources at the local end after the network equipment 1002 determines to release the allocated HS-RACH resources.

To conclude, though the solution that uses HS-RACHs to replace RACHs for uplink transmission is proposed in the prior art, a method for releasing HS-RACH resources is not provided. Then the HS-RACH resources in use may be occupied all the time and cannot be released. Therefore, the procedure in the technical solution of the prior art is incomplete and may not be applied currently. In contrast, the technical solution provided in embodiments of the present invention includes: obtaining trigger information; determining to release the allocated HS-RACH resources according to the obtained trigger information; and releasing the allocated HS-RACH resources after determining to release the allocated HS-RACH resources. Therefore, the HS-RACH resources in use may be released according to actual situations. This technical solution improves the procedure for using HS-RACHs to replace RACHs for uplink transmission and may be applied practically.

Further, embodiments of the present invention implement resource release notification through explicit signaling, thus keeping the resource usage of the UE and the network consistent, simplifying the release procedure, and improving the resource utilization.

Persons of ordinary skill in the art may understand that all or part of the steps of the method according to the embodiments of the present invention may be implemented by a program instructing relevant hardware. The program may be stored in a computer readable storage medium, such as a read-only memory (ROM), a magnetic disk or a compact disk read-only memory (CD-ROM).

The above is a detailed description of a resource release method, communication equipment, and a network system in embodiments of the present invention. Those of ordinary skill in the art can make variations and modifications to the present invention in terms of the specific implementations and application scopes according to the ideas of the present invention as defined in the appended claims.

Item 1. A method for releasing resources, including:
obtaining trigger information;
determining to release allocated high speed random access channel, HS-RACH, resources according to the obtained trigger information; and
releasing the allocated HS-RACH resources after determining to release the allocated HS-RACH resources.

Item 2. The method of item 1, wherein:
the step of obtaining the trigger information comprises: obtaining, by a network side, the trigger information;
the step of determining to release the allocated HS-RACH resources comprises: determining, by the network side, to release the allocated HS-RACH resources according to the obtained trigger information; and
the step of releasing the allocated HS-RACH resources comprises: sending, by the network side, a resource release indication to a user equipment, UE, to enable the UE to release the allocated HS-RACH resources at the local end of the UE, and releasing, by the network side, the allocated HS-RACH resources at the local end of the network side.

Item 3. The method of item 2, wherein:
the step of obtaining, by a network side, the trigger information comprises:
   obtaining, by the network side, the trigger information sent by the UE or the trigger information obtained after detecting the UE.

Item 4. The method of item 3, wherein:
the step of the obtaining, by the network side, the trigger information obtained after detecting the UE comprises:
   obtaining, by a NodeB on the network side, the trigger information after the NodeB detects the UE, or, the trigger information determined by a radio network side controller, RNC, on the network side after the RNC detects the UE.

Item 5. The method of item 4, wherein:
the trigger information determined by the RNC on the network side after the RNC detects the UE comprises:
   information for changing a UE state, which is determined by the RNC on the network side according to amount of data sent by the UE, the load of a cell where the UE resides, or a quality of service, QoS, requirement of the UE.

Item 6. The method of item 5, wherein:
when the RNC determines to change the UE state, the method further comprises:
   sending, by the RNC, a Radio Link Setup Request message carrying a UE ID and activation time to the NodeB, so that the NodeB sets up a radio link after receiving the Radio Link Setup Request message; and
   sending, by the RNC, the activation time to the UE;
   the step of releasing the allocated HS-RACH resources comprises: releasing, by the NodeB and the UE, the allocated HS-RACH resources respectively when the activation time is reached.

Item 7. The method of item 4, wherein:
the step of obtaining, by the NodeB on the network, the trigger information after the NodeB detects the UE comprises: information indicating that an error rate of the data sent by the UE within a set time is greater than a set value.

Item 8. The method of item 2, wherein:
the network side releases the allocated HS-RACH resources at the local end after receiving the data retransmitted by the UE; and/or,
the step of enabling the UE to release the allocated HS-RACH resources comprises: enabling the UE to release the allocated HS-RACH resources after retransmitting data to the network side and receiving an ACK message returned by the network side.

Item 9. The method of item 8, wherein:
the network side releases the allocated HS-RACH resources at the local end after determining that a set retransmission threshold is reached; and/or,
the UE releases the allocated HS-RACH resources at the local end after determining that the set retransmission threshold is reached.

Item 10. The method of item 1, wherein:
the step of obtaining the trigger information comprises: obtaining, by a UE, the trigger information detected by the UE;
the step of determining to release the allocated HS-RACH resources comprises: determining, by the UE, to release the allocated HS-RACH resources according to the detected trigger information; and
the step of releasing the allocated HS-RACH resources comprises: by the UE, enabling the network side to release the allocated HS-RACH resources at the local end of the network side by sending a resource release indication to the network side, and releasing the allocated HS-RACH resources at the local end of the UE.

Item 11. The method of any one of item 2 to item 10, wherein:
after the network side or the UE receives the resource release indication from the peer, the method further comprises: returning a resource release response to the peer; and
releasing, by the peer, the allocated HS-RACH resources after the peer receives the resource release response.

Item 12. The method of item 11, wherein:
the sent resource release indication is indicated through physical layer signaling or through a media access control, MAC, protocol data unit, PDU; and
the sent resource release response is indicated through a MAC PDU.

Item 13. The method of any one of item 1 to item 3, wherein:
the trigger information is information indicating that the UE has no data to send, or indicating that the amount of data sent by the UE is lower than a threshold, or indicating that the UE performs cell handover.

Item 14. Communication equipment, including:
an information obtaining unit, configured to obtain information related to resource release; and
a resource releasing unit, configured to determine to release allocated high-speed random access channel, HS-RACH, resources according to the information obtained by the information obtaining unit, and release the allocated resources at the local end.

Item 15. The communication equipment of item 14, wherein:
the information obtaining unit is configured to obtain trigger information;
the resource releasing unit comprises:
   a determining unit, configured to determine to release the allocated HS-RACH resources according to the trigger information obtained by the information obtaining unit; and
   a processing unit, configured to release the allocated HS-RACH resources at the local end after the determining unit determines to release the allocated HS-RACH resources.

Item 16. The communication equipment of item 15, further including:
a sending unit, configured to send a resource release indication externally after the determining unit determines to release the allocated HS-RACH resources.

Item 17. The communication equipment of any one of item 14 to item 16, wherein:
the information obtaining unit is configured to obtain the trigger information indicating that a user equipment, UE, has no data to send, or indicating that the amount of data sent by the UE is lower than a threshold, or indicating that the UE performs cell handover.

Item 18. The communication equipment of item 14, wherein:
the information obtaining unit is configured to obtain a resource release indication delivered by a network side after the network side determines to release the allocated HS-RACH resources according to the trigger information; and
the resource releasing unit is configured to determine to release the allocated HS-RACH resources according to the recourse release indication received by the information obtaining unit, and release the allocated HS-RACH resources at the local end.

Item 19. The communication equipment of item 18, the equipment further comprising:
an information reporting unit, configured to send the trigger information detected by the UE to the network side before the information obtaining unit obtains the resource release indication, wherein the trigger information is information indicating that the UE has no data to send, or indicating that the amount of data sent by the UE is lower than a threshold, or indicating that the UE performs cell handover.

Item 20. The communication equipment of any one of item 14 to item 16,
the information obtaining unit is configured to obtain the trigger information sent by a UE or detected by the network equipment to indicate that the UE has no data to send, to indicate that the amount of data sent by the UE is lower than a threshold, or to indicate that the UE performs cell handover;
or configured to obtain trigger information sent by a radio network controller, RNC, wherein the trigger information is determined by the RNC to change the state of the UE according to the amount of data sent by the UE, the load of the cell where the UE resides, or a quality of service, QoS, requirement of the UE;
or configured to obtain trigger information detected by the network equipment to indicate that an error rate of the data sent by the UE within a set time is greater than a set value.

Item 21. A network system, including:
a network equipment, configured to: obtain trigger information, determine to release allocated high-speed random access channel, HS-RACH, resources according to the obtained trigger information, and release the allocated HS-RACH resources at the local end.

## Claims

1. A method for releasing high speed random access channel, HS-RACH, resources, comprising:
sending (401, 501), by a user equipment, UE, uplink data by using the HS-RACH resources in a current cell;
determining (402, 502), by the UE, to reselect a cell after finding that a cell reselection condition is met;
sending (403, 503), by the UE, a scheduling information, SI, to a NodeB of the current cell, wherein an ID of a logical channel with highest priority in the SI is set to 1111 as release request or release indication; and
releasing (406, 505), by the UE, the HS-RACH resources of the current cell.

2. The method of claim 1, wherein after sending (403), by the UE, the SI to the NodeB of the current cell, wherein the ID of the logical channel with highest priority in the SI is set to 1111 as release request, and before the releasing (406), by the UE, the HS-RACH resources of the current cell, the method further comprises:
sending (404), by the UE, data to be retransmitted to the NodeB of the current cell.

3. The method of claim 1 or 2, wherein after the sending (403), by the UE, the SI to the NodeB of the current cell, wherein the ID of the logical channel with highest priority in the SI is set to 1111 as release request, and before the releasing (406), by the UE, the HS-RACH resources of the current cell, the method further comprises:
receiving (405), by the UE, a release indication sent by the NodeB of the current cell.

4. A method for releasing high speed random access channel, HS-RACH, resources, comprising:
receiving (401, 501), by a NodeB, uplink data sent by a user equipment, UE, by using the HS-RACH resources;
receiving (403, 503), by the NodeB, a scheduling information, SI, from the UE after the UE finds that cell reselection conditions are met; wherein an ID of a logical channel with the highest priority in the SI is set to 1111 as release request or release indication; and
releasing (504), by the NodeB, the HS-RACH resources.

5. The method of claim 4, wherein before the releasing, by the NodeB, the HS-RACH resources, the method further comprises:
receiving (404), by the NodeB, data to be retransmitted from the UE.

6. The method of claim 4 or 5, wherein after the receiving (403), by the NodeB, the SI from the UE after the UE finds that cell reselection conditions are met; wherein the ID of the logical channel with the highest priority in the SI is set to 1111 as release request, the method further comprises:
sending (405), by the NodeB, a release indication to the UE.

7. A user equipment, UE, for releasing high speed random access channel, HS-RACH, resources, comprising:
means for sending uplink data by using the HS-RACH resources in a current cell;
means for determining to reselect a cell after finding that cell reselection conditions are met;
means for sending a scheduling information, SI, to a NodeB of the current cell, wherein an ID of a logical channel with the highest priority in the SI is set to 1111 as release request or release indication; and
means for releasing the HS-RACH resources of the current cell.

8. The UE of claim 7, further comprising:
means for, after the sending the SI to the NodeB of the current cell, wherein the ID of the logical channel with highest priority in the SI is set to 1111 as release request, and before the releasing the HS-RACH resources of the current cell, sending data to be retransmitted to the NodeB of the current cell.

9. The UE of claim 7 or 8, further comprising:
means for, after the sending the SI to the NodeB of the current cell, wherein the ID of the logical channel with highest priority in the SI is set to 1111 as release request, and before the releasing the HS-RACH resources of the current cell, receiving a release indication sent by the NodeB of the current cell.

10. A NodeB for releasing high speed random access channel, HS-RACH, resources, comprising:
means for receiving uplink data sent by a user equipment, UE, by using the HS-RACH resources;
means for receiving a scheduling information, SI, from the UE after the UE finds that cell reselection conditions are met; wherein an ID of a logical channel with the highest priority in the SI is set to 1111 as release request or release indication; and
means for releasing the HS-RACH resources.

11. The NodeB of claim 10, further comprising:
means for, before the releasing the HS-RACH resources, receiving data to be retransmitted from the UE.

12. The NodeB of claim 10 or 11, further comprising:
means for, after the receiving the SI from the UE after the UE finds that cell reselection conditions are met, wherein the ID of the logical channel with the highest priority in the SI is set to 1111 as release request, sending a release indication to the UE.

13. A computer program product stored on a computer readable storage medium, which contains codes which instruct a user equipment, UE, to perform the following steps, comprising
sending (401, 501), by the UE, uplink data by using high speed random access channel, HS-RACH, resources in a current cell;
determining (402, 502), by the UE, to reselect a cell after finding that a cell reselection condition is met;
sending (403, 503), by the UE, a scheduling information, SI, to a NodeB of the current cell, wherein an ID of a logical channel with highest priority in the SI is set to 1111 as release request or release indication; and
releasing (406, 505), by the UE, the HS-RACH resources of the current cell.

14. A computer program product stored on a computer readable storage medium, which contains codes which instruct a NodeB, to perform the following steps, comprising
receiving (401, 501), by the NodeB, uplink data sent by a user equipment, UE, by using high speed random access channel, HS-RACH, resources; and
receiving (403, 503), by the NodeB, a scheduling information, SI, from the UE after the UE finds that cell reselection conditions are met; wherein an ID of a logical channel with the highest priority in the SI is set to 1111 as release request or release indication; and
releasing, by the NodeB, the HS-RACH resources.

15. The computer program product according to claim 14, wherein the codes further instruct the NodeB to perform the following step:
after the receiving (403), by the NodeB, the SI from the UE after the UE finds that cell reselection conditions are met, wherein the ID of the logical channel with the highest priority in the SI is set to 1111 as release request, sending (405), by the NodeB, a release indication to the UE.

## Patentansprüche

1. Verfahren zum Freigeben von Hochgeschwindigkeits-Direktzugriffskanal-Ressourcen bzw. HS-RACH-Ressourcen, umfassend:
Senden (401, 501), durch ein Benutzergerät, UE, von Aufwärtsstreckendaten unter Verwendung der HS-RACH-Ressourcen in einer gegenwärtigen Zelle;
Bestimmen (402, 502), durch das UE, eine Zelle wieder auszuwählen, nachdem festgestellt wird, dass eine Zellenwiederauswahlbedingung erfüllt ist;
Senden (403, 503), durch das UE, von "Scheduling"-Informationen, SI, zu einem NodeB der gegenwärtigen Zelle, wobei eine ID eines Logikkanals mit der höchsten Priorität in den SI zu 1111 als Freigabeanfrage oder Freigabeangabe gesetzt wird; und
Freigeben (406, 505), durch das UE, der HS-RACH-Ressourcen der gegenwärtigen Zelle.

2. Verfahren nach Anspruch 1, wobei das Verfahren nach dem Senden (403), durch das UE, der SI zum NodeB der gegenwärtigen Zelle, wobei die ID des Logikkanals mit der höchsten Priorität in den SI zu 1111 als Freigabeanfrage gesetzt wird, und vor dem Freigeben (406), durch das UE, der HS-RACH-Ressourcen der gegenwärtigen Zelle ferner Folgendes umfasst:
Senden (404), durch das UE, von Daten, die erneut zum NodeB der gegenwärtigen Zelle übermittelt werden sollen.

3. Verfahren nach Anspruch 1 oder 2, wobei das Verfahren nach dem Senden (403), durch das UE, der SI zum NodeB der gegenwärtigen Zelle, wobei die ID des Logikkanals mit der höchsten Priorität in den SI zu 1111 als Freigabeanfrage gesetzt wird, und vor dem Freigeben (406), durch das UE, der HS-RACH-Ressourcen der gegenwärtigen Zelle ferner Folgendes umfasst:
Empfangen (405), durch das UE, einer Freigabeangabe, die durch den NodeB der gegenwärtigen Zelle gesendet wird.

4. Verfahren zum Freigeben von Hochgeschwindigkeits-Direktzugriffskanal-Ressourcen bzw. HS-RACH-Ressourcen, umfassend:
Empfangen (401, 501), durch einen NodeB, von Aufwärtsstreckendaten, die durch ein Benutzergerät, UE, unter Verwendung der HS-RACH-Ressourcen gesendet werden;
Empfangen (403, 503), durch den NodeB, von "Scheduling"-Informationen, SI, vom UE, nachdem das UE feststellt, dass Zellenwiederauswahlbedingungen erfüllt sind;
wobei eine ID eines Logikkanals mit der höchsten Priorität in den SI zu 1111 als Freigabeanfrage oder Freigabeangabe gesetzt wird; und
Freigeben (504), durch den NodeB, der HS-RACH-Ressourcen.

5. Verfahren nach Anspruch 4, wobei das Verfahren vor dem Freigeben, durch den NodeB, der HS-RACH-Ressourcen ferner Folgendes umfasst:
Empfangen (404), durch den NodeB, von Daten, die erneut vom UE übermittelt werden sollen.

6. Verfahren nach Anspruch 4 oder 5, wobei das Verfahren nach dem Empfangen (403), durch den NodeB, der SI vom UE, nachdem das UE feststellt, dass Zellenwiederauswahlbedingungen erfüllt sind; wobei die ID des Logikkanals mit der höchsten Priorität in den SI zu 1111 als Freigabeanfrage gesetzt wird, ferner Folgendes umfasst:
Senden (405), durch den NodeB, einer Freigabeangabe zum UE.

7. Benutzergerät, UE, zum Freigeben von Hochgeschwindigkeits-Direktzugriffskanal-Ressourcen bzw. HS-RACH-Ressourcen, umfassend:
Mittel zum Senden von Aufwärtsstreckendaten unter Verwendung der HS-RACH-Ressourcen in einer gegenwärtigen Zelle;
Mittel zum Bestimmen, eine Zelle wieder auszuwählen, nachdem festgestellt wird, dass Zellenwiederauswahlbedingungen erfüllt sind;
Mittel zum Senden von "Scheduling"-Informationen, SI, zu einem NodeB der gegenwärtigen Zelle, wobei eine ID eines Logikkanals mit der höchsten Priorität in den SI zu 1111 als Freigabeanfrage oder Freigabeangabe gesetzt wird; und
Mittel zum Freigeben der HS-RACH-Ressourcen der gegenwärtigen Zelle.

8. UE nach Anspruch 7, ferner umfassend:
Mittel zum, nach dem Senden der SI zum NodeB der gegenwärtigen Zelle, wobei die ID des Logikkanals mit der höchsten Priorität in den SI zu 1111 als Freigabeanfrage gesetzt wird, und vor dem Freigeben der HS-RACH-Ressourcen der gegenwärtigen Zelle, Senden von Daten, die erneut zum NodeB der gegenwärtigen Zelle übermittelt werden sollen.

9. UE nach Anspruch 7 oder 8, ferner umfassend:
Mittel zum, nach dem Senden der SI zum NodeB der gegenwärtigen Zelle, wobei die ID des Logikkanals mit der höchsten Priorität in den SI zu 1111 als Freigabeanfrage gesetzt wird, und vor dem Freigeben der HS-RACH-Ressourcen der gegenwärtigen Zelle, Empfangen einer Freigabeangabe, die durch den NodeB der gegenwärtigen Zelle gesendet wird.

10. NodeB zum Freigeben von Hochgeschwindigkeits-Direktzugriffskanal-Ressourcen bzw. HS-RACH-Ressourcen, umfassend:
Mittel zum Empfangen von Aufwärtsstreckendaten, die durch ein Benutzergerät, UE, unter Verwendung der HS-RACH-Ressourcen gesendet werden;
Mittel zum Empfangen von "Scheduling"-Informationen, SI, vom UE, nachdem das UE feststellt, dass Zellenwiederauswahlbedingungen erfüllt sind; wobei eine ID eines Logikkanals mit der höchsten Priorität in den SI zu 1111 als Freigabeanfrage oder Freigabeangabe gesetzt wird; und
Mittel zum Freigeben der HS-RACH-Ressourcen.

11. NodeB nach Anspruch 10, ferner umfassend:
Mittel zum, vor dem Freigeben der HS-RACH-Ressourcen, Empfangen von Daten, die erneut vom UE übermittelt werden sollen.

12. NodeB nach Anspruch 10 oder 11, ferner umfassend:
Mittel zum, nach dem Empfangen der SI vom UE, nachdem das UE feststellt, dass Zellenwiederauswahlbedingungen erfüllt sind, wobei die ID des Logikkanals mit der höchsten Priorität in den SI zu 1111 als Freigabeanfrage gesetzt wird, Senden einer Freigabeangabe zum UE.

13. Computerprogrammprodukt, das auf einem computerlesbaren Speichermedium gespeichert ist und Codes zum Anweisen eines Benutzergeräts, UE, enthält, die folgenden Schritte durchzuführen, umfassend
Senden (401, 501), durch das UE, von Aufwärtsstreckendaten unter Verwendung von Hochgeschwindigkeits-Direktzugriffskanal-Ressourcen bzw. HS-RACH-Ressourcen in einer gegenwärtigen Zelle;
Bestimmen (402, 502), durch das UE, eine Zelle wieder auszuwählen, nachdem festgestellt wird, dass eine Zellenwiederauswahlbedingung erfüllt ist;
Senden (403, 503), durch das UE, von "Scheduling"-Informationen, SI, zu einem NodeB der gegenwärtigen Zelle, wobei eine ID eines Logikkanals mit höchster Priorität in den SI zu 1111 als Freigabeanfrage oder Freigabeangabe gesetzt wird; und Freigeben (406, 505), durch das UE, der HS-RACH-Ressourcen der gegenwärtigen Zelle.

14. Computerprogrammprodukt, das auf einem computerlesbaren Speichermedium gespeichert ist und Codes zum Anweisen eines NodeB enthält, die folgenden Schritte durchzuführen, umfassend
Empfangen (401, 501), durch den NodeB, von Aufwärtsstreckendaten, die durch ein Benutzergerät, UE, unter Verwendung von Hochgeschwindigkeits-Direktzugriffskanal-Ressourcen bzw. HS-RACH-Ressourcen gesendet werden; und Empfangen (403, 503), durch den NodeB, von "Scheduling"-Informationen, SI, vom UE, nachdem das UE feststellt, dass Zellenwiederauswahlbedingungen erfüllt sind; wobei eine ID eines Logikkanals mit der höchsten Priorität in den SI zu 1111 als Freigabeanfrage oder Freigabeangabe gesetzt wird; und
Freigeben, durch den NodeB, der HS-RACH-Ressourcen.

15. Computerprogrammprodukt nach Anspruch 14, wobei die Codes den NodeB ferner anweisen, den folgenden Schritt durchzuführen:
nach dem Empfangen (403), durch den NodeB, der SI vom UE, nachdem das UE feststellt, dass Zellenwiederauswahlbedingungen erfüllt sind, wobei die ID des Logikkanals mit der höchsten Priorität in den SI zu 1111 als Freigabeanfrage gesetzt wird, Senden (405), durch den NodeB, einer Freigabeangabe zum UE.

## Revendications

1. Procédé destiné à libérer des ressources de canal à accès aléatoire à haut débit, HS-RACH, comprenant :
l'envoi (401, 501), par un équipement utilisateur, UE, de données de liaison montante en utilisant les ressources HS-RACH dans une cellule courante ;
la détermination (402, 502), par l'UE, du fait de resélectionner une cellule après avoir trouvé qu'une condition de resélection de cellule était satisfaite ;
l'envoi (403, 503), par l'UE, d'une information de planification, SI, à un noeud B de la cellule courante, dans lequel un ID d'un canal logique ayant la priorité la plus élevée dans l'information SI est réglé à 1111 en tant que demande de libération ou qu'indication de libération ; et
la libération (406, 505), par l'UE, des ressources HS-RACH de la cellule courante.

2. Procédé selon la revendication 1, dans lequel, après l'envoi (403), par l'UE, de l'information SI au noeud B de la cellule courante, dans lequel l'ID du canal logique ayant la priorité la plus élevée dans l'information SI est réglé à 1111 en tant que demande de libération, et avant la libération (406), par l'UE, des ressources HS-RACH de la cellule courante, le procédé comprend en outre :
l'envoi (404), par l'UE, de données devant être retransmises au noeud B de la cellule courante.

3. Procédé selon la revendication 1 ou 2, dans lequel, après l'envoi (403), par l'UE, de l'information SI au noeud B de la cellule courante, dans lequel l'ID du canal logique ayant la priorité la plus élevée dans l'information SI est réglé à 1111 en tant que demande de libération, et avant la libération (406), par l'UE, des ressources HS-RACH de la cellule courante, le procédé comprend en outre :
la réception (405), par l'UE, d'une indication de libération envoyée par le noeud B de la cellule courante.

4. Procédé destiné à libérer des ressources de canal à accès aléatoire à haut débit, HS-RACH, comprenant :
la réception (401, 501), par un noeud B, de données de liaison montante envoyées par un équipement utilisateur, UE, en utilisant les ressources HS-RACH ;
la réception (403, 503), par le noeud B, d'une information de planification, SI, en provenance de l'UE après que l'UE a trouvé que des conditions de resélection de cellule étaient satisfaites ; dans lequel un ID d'un canal logique ayant la priorité la plus élevée dans l'information SI est réglé à 1111 en tant que demande de libération ou qu'indication de libération ; et
la libération (504), par le noeud B, des ressources HS-RACH.

5. Procédé selon la revendication 4, dans lequel, avant la libération, par le noeud B, des ressources HS-RACH, le procédé comprend en outre :
la réception (404), par le noeud B, de données devant être retransmises depuis l'UE.

6. Procédé selon la revendication 4 ou 5, dans lequel, après la réception (403), par le noeud B, de l'information SI en provenance de l'UE après que l'UE a trouvé que des conditions de resélection de cellule étaient satisfaites ; dans lequel l'ID du canal logique ayant la priorité la plus élevée dans l'information SI est réglé à 1111 en tant que demande de libération, le procédé comprend en outre :
l'envoi (405), par le noeud B, d'une indication de libération à l'UE.

7. Equipement utilisateur, UE, destiné à libérer des ressources de canal à accès aléatoire à haut débit, HS-RACH, comprenant :
un moyen destiné à envoyer des données de liaison montante en utilisant les ressources HS-RACH dans une cellule courante ;
un moyen destiné à déterminer le fait de resélectionner une cellule après avoir trouvé que des conditions de resélection de cellule étaient satisfaites ;
un moyen destiné à envoyer une information de planification, SI, à un noeud B de la cellule courante, dans lequel un ID d'un canal logique ayant la priorité la plus élevée dans l'information SI est réglé à 1111 en tant que demande de libération ou qu'indication de libération ; et
un moyen destiné à libérer les ressources HS-RACH de la cellule courante.

8. UE selon la revendication 7, comprenant en outre :
un moyen destiné, après l'envoi de l'information SI au noeud B de la cellule courante, dans lequel l'ID du canal logique ayant la priorité la plus élevée dans l'information SI est réglé à 1111 en tant que demande de libération, et avant la libération des ressources HS-RACH de la cellule courante, à envoyer des données devant être retransmises au noeud B de la cellule courante.

9. UE selon la revendication 7 ou 8, comprenant en outre :
un moyen destiné, après l'envoi de l'information SI au noeud B de la cellule courante, dans lequel l'ID du canal logique ayant la priorité la plus élevée dans l'information SI est réglé à 1111 en tant que demande de libération, et avant la libération des ressources HS-RACH de la cellule courante, à recevoir une indication de libération envoyée par le noeud B de la cellule courante.

10. Noeud B destiné à libérer des ressources de canal à accès aléatoire à haut débit, HS-RACH, comprenant :
un moyen destiné à recevoir des données de liaison montante envoyées par un équipement utilisateur, UE, en utilisant les ressources HS-RACH ;
un moyen destiné à recevoir une information de planification, SI, en provenance de l'UE après que l'UE a trouvé que des conditions de resélection de cellule étaient satisfaites ; dans lequel un ID d'un canal logique ayant la priorité la plus élevée dans l'information SI est réglé à 1111 en tant que demande de libération ou qu'indication de libération ; et
un moyen destiné à libérer les ressources HS-RACH.

11. Noeud B selon la revendication 10, comprenant en outre :
un moyen destiné, avant la libération des ressources HS-RACH, à recevoir des données devant être retransmises depuis l'UE.

12. Noeud B selon la revendication 10 ou 11, comprenant en outre :
un moyen destiné, après la réception de l'information SI en provenance de l'UE après que l'UE a trouvé que des conditions de resélection de cellule étaient satisfaites, dans lequel l'ID du canal logique ayant la priorité la plus élevée dans l'information SI est réglé à 1111 en tant que demande de libération, à envoyer une indication de libération à l'UE.

13. Produit de programme d'ordinateur stocké sur un support de stockage lisible par ordinateur, qui contient des codes qui ordonnent à un équipement utilisateur, UE, d'exécuter les étapes suivantes, comprenant
l'envoi (401, 501), par l'UE, de données de liaison montante en utilisant des ressources de canal à accès aléatoire à haut débit, HS-RACH dans une cellule courante ;
la détermination (402, 502), par l'UE, du fait de resélectionner une cellule après avoir trouvé qu'une condition de resélection de cellule était satisfaite ;
l'envoi (403, 503), par l'UE, d'une information de planification, SI, à un noeud B de la cellule courante, dans lequel un ID d'un canal logique ayant la priorité la plus élevée dans l'information SI est réglé à 1111 en tant que demande de libération ou qu'indication de libération ; et
la libération (406, 505), par l'UE, des ressources HS-RACH de la cellule courante.

14. Produit de programme d'ordinateur stocké sur un support de stockage lisible par ordinateur, qui contient des codes qui ordonnent à un noeud B d'exécuter les étapes suivantes, comprenant
la réception (401, 501), par le noeud B, de données de liaison montante envoyées par un équipement utilisateur, UE, en utilisant des ressources de canal à accès aléatoire à haut débit, HS-RACH ; et
la réception (403, 503), par le noeud B, d'une information de planification, SI, en provenance de l'UE après que l'UE a trouvé que des conditions de resélection de cellule étaient satisfaites ; dans lequel un ID d'un canal logique ayant la priorité la plus élevée dans l'information SI est réglé à 1111 en tant que demande de libération ou qu'indication de libération ; et
la libération, par le noeud B, des ressources HS-RACH.

15. Produit de programme d'ordinateur selon la revendication 14, dans lequel les codes ordonnent en outre au noeud B d'exécuter l'étape suivante :
après la réception (403), par le noeud B, de l'information SI en provenance de l'UE après que l'UE a trouvé que des conditions de resélection de cellule étaient satisfaites, dans lequel l'ID du canal logique ayant la priorité la plus élevée dans l'information SI est réglé à 1111 en tant que demande de libération, l'envoi (405), par le noeud B, d'une indication de libération à l'UE.
